# EUROPEAN PATENT SPECIFICATION

(11) **EP 1 257 385 B1**
(45) Date of publication and mention of the grant of the patent: **01.12.2004**
(21) Application number: 01902645.9
(22) Date of filing: 17.01.2001
(51) Int. Cl.: B23Q 9/00, B23B 29/02

(54) **COMPOSABLE MACHINE TOOL**
ZUSAMMENSETZBARE WERKZEUGMASCHINE
MACHINE-OUTIL COMPOSABLE

(30) Priority: 18.01.2000 IT CZ200002
(43) Date of publication of application: 20.11.2002
(73) Proprietor: Russo, Evangelista, 88050 Sellia Marina (IT)
(72) Inventor: Russo, Evangelista, 88050 Sellia Marina (IT)
(86) International application number: PCT/IT2001/000021
(87) International publication number: WO 2001/053036

(56) References cited:
- EP-A- 0 537 124
- GB-A- 210 838
- US-A- 4 268 196
- US-A- 4 758 121
- US-A- 4 850 756
- US-A- 4 990 037
- PATENT ABSTRACTS OF JAPAN vol. 007, no. 269 (M-259), 30 November 1983 (1983-11-30) & JP 58 149111 A (SHIN NIPPON SEITETSU KK), 5 September 1983 (1983-09-05)

## Description

The composable machine tool subject of the present invention is a machine for chip removal within wide diameter and great length clearance holes, made up of a shaft upon which is mounted a machine base controlled by a first engine for rotation movement and a second engine for translation movement. Such a machine tool, according to the preamble of independent claim 1, is known from document US 4 268 196 A.

The machine described in the present invention is a composable machine, it has been studied to allow the operator to easily and precisely install it on major mechanical structures, avoiding the disassembly of the aforesaid structures, transportation with huge vehicles in specialised centres in order to repair them, thus saving time and money, advantages, these that were impossible to obtain with traditional machine tools.

The machine is studied to process workpieces with wide diameter clearance holes and to process workpieces with great length clearance holes.

Moreover, the aim of the present invention is to obtain a machine that can also be used in water.

A limit of the machines now on the market is that they are not able to process wide diameter workpieces or great length workpieces, if the said workpieces are not disassembled and transported in specialised centres with enormous traditional equipment.

In fact the chip removal machines such as lathes, drilling machines, cross cutting machines in order to work precisely need extremely rigid shafts to support without bending, the stress that the cutting tool exerts and therefore they must be very robust. If the shaft rigidity is not adequate, the stress that the machine must exert in the point in which the tool cuts influences the machine precision. Therefore the quality of the machined surfaces decreases and it is not what one expects.

There are machines on the market that can operate on the spot without disassembling the workpieces that are to be repaired, above all if these are large and are mounted on large mechanical structures. One of these machines is described in patent US4268196 that allows only drilling. It does not however allow precision turning or boring.

The present invention, as defined in claim 1, instead allows precision works on major (both diameter-wise and length-wise) workpieces, because the shaft, before the machine begins to operate, is set into traction, thus reducing its flexibility. The shaft traction is determined by the fact that the workpiece is fastened between two supporting plates that hold the said shaft in traction during the entire processing period.

The backings pushed by the external slides of one or two jacks pin down through the column heads the workpieces. The internal slides of the jack in order to support the pressure exerted on them must be fastened by slotted shoulders fastened the shaft that is subject to the tensile stress equal to the pressure exerted by the jacks on the workpiece. The workpiece is firmly held, fastened by the jack pressure and contemporarily the machine tool shaft is kept in traction by a force that is equal and contrary to the pressure exerted by the jacks.

As an effect of this tensile stress the shaft of the present portable machine is more rigid than that of a traditional machine and therefore allows turning and boring with the necessary precision on workpieces with wide diameter and great length clearance holes.

The main characteristic of the present invention as per claim 1 is to make a composable machine tool for chip removal on major workpieces, within wide diameter and/or great length clearance holes, made up of a shaft upon which a machine base is mounted, controlled by a first motor for rotation movement and by a second motor for translation movement, upon which are mounted the tool design elements. The machine base is made up of a bush, that presents a groove that receives, like a key, a rack fastened on the shaft by allen screws, and a rotating ring, mounted on the bush with two airtight bearings. The bush can translate on the shaft, which shaft has a tubular section. On the rotating ring are mounted, on both sides of the rotating ring, two flanges integral with the rotating ring that carry tool design elements or toolheads and that have a greater diameter than the rotating ring itself. The tool design elements or toolheads are mounted through screws on the flanges. On the shaft two support bearings are mounted on both sides of the workpiece, the bearings having some spokes each of which have radial slots, in which are inserted, regulated and locked groups to tighten the workpiece. On the shaft, at least on one side, a hydraulic jack is mounted, and at the two extremities of the shaft two slotted shoulders are mounted to allow the jack to exert the necessary pressure to lock the workpiece. In this manner, the machine shaft is set in traction between the slotted shoulders and it firmly locks with the supporting bearings the workpiece. The machine shaft, set in traction has a greater rigidity and the machine allows operating upon large diameters and/or great lengths workpieces, without the danger that the shaft may be subject to peak loads.

Another characterising feature of the machine subject of the present invention as defined in claim 1 is that the toothed rack is mounted through allen screws on the shaft, the toothed rack protrudes from the shaft diameter and is grafted on as a key connects the shaft to the ring and to the supporting bearing hub. The toothed rack itself is used as a key, thus simplifying the construction.

In a preferred embodiment of the present invention, the groups that insert themselves in the slots to tighten the workpiece are built each by the first threaded bushes that are locked with ring nuts that are screwed on the external surface of the first threaded bushes. Both the first threaded bushes and the ring nuts have on the external rim holes to allow appropriate spanners to adequately fasten the first threaded bush and metal ring nut on the bearing They are positioned with the axis of the hole of the first threaded bush in correspondence of the average diameter of the workpiece. Within the first threaded bush, a second threaded bush is screwed onto the external surface that is screwed within the first threaded bush. Before fastening the second bush in the first threaded bush, on the second bush a ring nut is fastened. Both the second bush and the ring nut have holes to allow the fastening with appropriate spanners. In the second bush, a column fitted with spacers placed between the column head and the second bush head. The second bush of each spoke of the supporting bearings is screwed or unscrewed until all heads do not touch the workpiece.

The groups that fasten the workpiece allow to be moved radially along the slots, in this manner the groups are moved into the best position in order to be pressed onto the workpiece. Eventual workpiece asymmetries are overcome by regulating each group differently on the slots of each single supporting bearing.

The engines may be hydraulic engines driven by a hydraulic power unit connected to them through tubes. Hydraulic engines allow the use of the machine in water. The machine tools present on the market are driven by electric engines that do not allow, unless they are given heavy and expensive water resistant casings, their underwater use because of the obvious danger of using electrical current underwater. The possibility, therefore, to operate underwater on workpieces with wide diameter and great length clearance holes, presents insurmountable difficulties for other machines. The present machine because of its hydraulic engines does not present the inconveniences of the other portable machines tools and, furthermore, it has the necessary shaft rigidity to carry out the operations with due precision.

In a further preferred embodiment the motors are contained in a casing, in order to avoid that the chip may end up in the engines, damaging them.

The motor for translation movement may drive a worm gear that moves a gear wheel that meshes with the toothed rack. The translation movement is a continuous movement with no jerks, to avoid acceleration that may turn into dangerous stress on the tools and generally on the machine.

Another characteristic of the machine subject of the present invention is that the tubes may be wound and unwound in a hose reel as the machine base draws nearer and as it moves away. To avoid that the tubes obstruct processing, they are collected and unwound according to requirements.

The slotted shoulder can be fastened by a bolt that is screwed on a threaded hole present on the shaft and on a pivot. The slotted shoulder is, therefore easily, with only one bolt, fastened on the shaft and on the pivot.

The slotted shoulder can be able to be extracted by a bolt that is screwed in the threaded hole present on the slotted shoulder itself, but has a larger diameter than the threaded hole on the shaft. This second bolt pushes externally the slotted shoulder itself. Just as easily the slotted shoulder is extracted, unscrewing the clamp bolt and inserting the apposite bolt for the greater diameter extraction of the threaded hole present on the shaft and on the pivot.

The invention characteristics and advantages will appear clearly from the description hereafter of certain realisation ways given as an unrestricted example in figures 1, 2, 3, 4, 5, 6, 7, 8 and 9.
Figure 1 represents a section of the machine tool subject of the present invention.
Figure 2 represents a view of a supporting bearing.
Figure 3 represents a section of a supporting bearing
Figure 4 represents a section of the final part of the clamping system.
Figure 5 represents a section of the clamping ring during the assembly.
Figure 6 represents a different section of the final part of the clamping system.
Figure 7 represents a section of the clamping ring during the disassembly.
Figure 8 represents a section of the machine tool subject of the present invention of only one jack.
Figure 9 represents a section of the machine tool subject of the present invention, which mounts the processing tools.

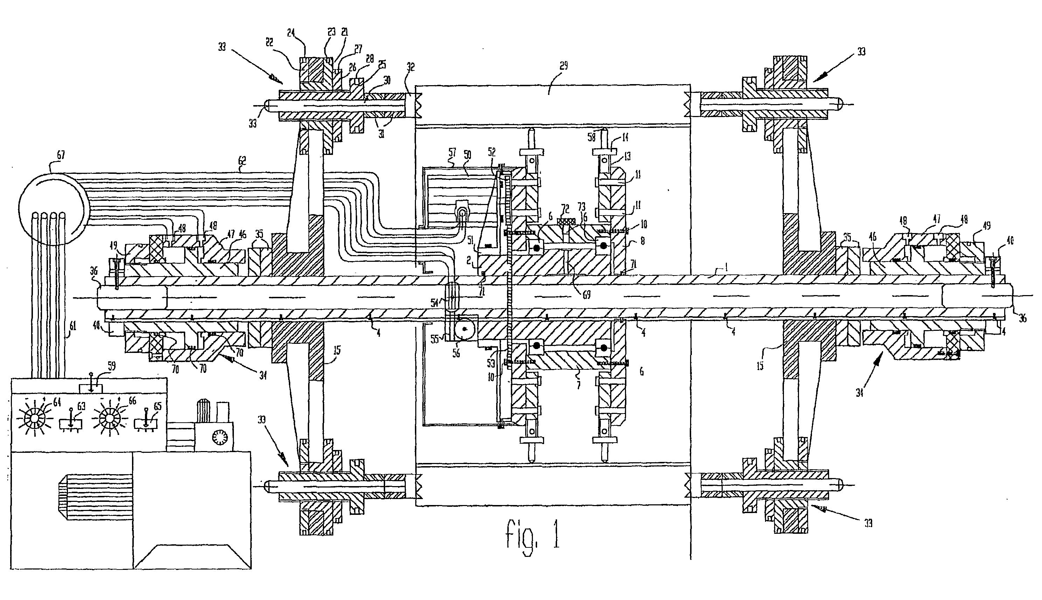

In fig.1, a machine base made up of a bush 2 and of a rotating ring 7 is mounted on a tubular sectioned shaft 1. To improve corrosion resistance the shaft surface is chromium plated. On shaft 1 a toothed rack 3 is mounted, which is inserted in the groove made in shaft 1 and that is fastened to it through a series of allen screws 4. The toothed rack 3 serves also as a key for bush 2, because in bush 2 a groove is made that receives the rack key 3. To improve corrosion resistance and its duration, bush 2 is bronzed.

Because rack 3 is working in groove, it does not allow the relative rotation between shaft 1 and the bush 2. It is instead possible to have translation movement relative to the sense of the longitudinal direction of shaft 1 between the shaft 1 itself and bush 2.

Two bearings 6 that support a rotating ring 7 are mounted on bush 2. The bearings 6 are airtight and are fastened by a flange 8 and by a flange 9. The space between the bush 2 and the rotating ring 7 creates the lubricant tank of the machine base. The bush 2 has a hole 69 for the lubrication of the bush 2 itself, of shaft 1, of rack 3, of the rotating ring 7. The lubricant cannot fall out because of the seals 71.

The two 8 and 9 flanges are mounted on one side and the other of the rotating ring 7 through bolts 10, which make it integral with the rotating ring.

The two flanges 8 and 9 have a greater diameter that the rotating ring 7. The flanges 8 and 9 in the part that comes out from the rotating ring 7 have a series of holes, which allows through bolts 11 to mount tool design elements 12. Flanges 8 and 9 also accomplish the task of locking the bearings 6 in the housing of the rotating ring 7.

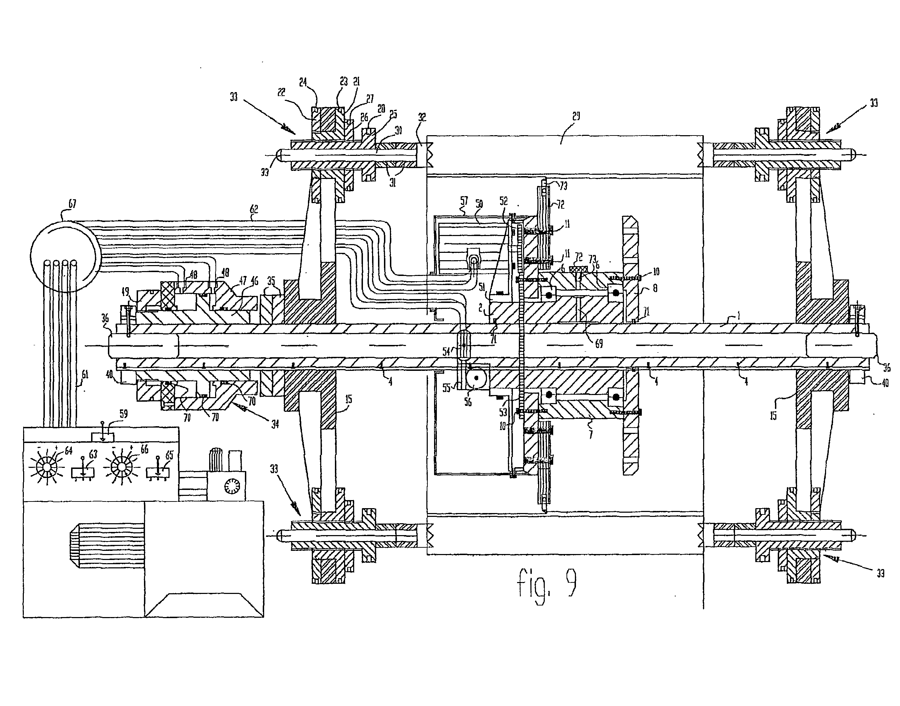

Flanges 8 and 9 are used both to fasten the centring elements of the machine on workpiece 29 and to fasten the elements 72 that bear the cutting tools 73 (see fig.9).

On flanges 8 and 9 are mounted some tool design heads (12) that carry threaded pivots 13 endowed with ring nuts 14 that allow though their movement to centre the machine within workpiece 29.

The ring nuts 14 are manoeuvred until the centres 58 do not touch the internal surface of workpiece 29, centring shaft 1 on workpiece 29.

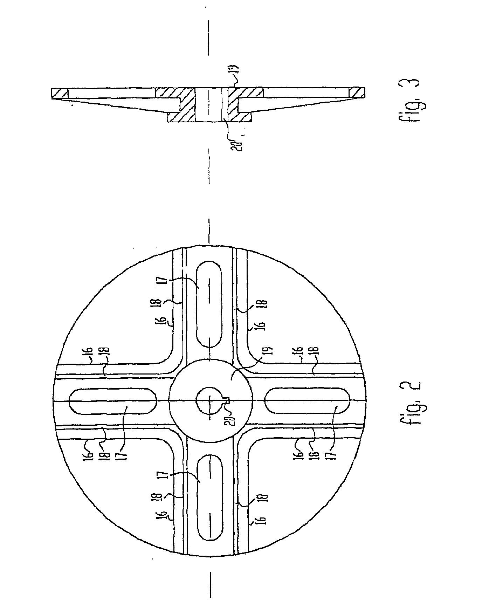

After the centring, the supporting bearings 15 are inserted on both sides of shaft 1 (see also fig. 2 and.3).

The supporting bearings 15 have spokes 16, each of which has radial slots 17, and stiffening flanges 18. On each hub 19 of each supporting bearing 15 are made grooves 20 that receive the rack key 3. In this manner the supporting bearings 15 can shift on the shaft but not rotate.

In each slot 17 groups 33 are inserted to fasten the workpiece. The groups 33 in order to fasten the piece can be regulated according to the diameter of workpiece 29 and once they are regulated in the correct position, they are locked. The groups to fasten the piece are made up of the first threaded bushes 21 that are locked with the rings 22 that are screwed on the external surface of the first threaded bushes 21. Both the first threaded bushes 21 and the rings 22 are endowed on the external rim of respectively holes 23 and 24 to allow with opportune spanners to adequately tighten the first threaded bush 21 and the ring 22 on bearing 15. They are positioned with the axis of the hole of the first threaded bush 21 in correspondence of the average diameter of workpiece 29.

Within the first threaded bush 21 is screwed a second bush 25 threaded on its external surface that is screwed within the first threaded bush 21.

Before screwing the second bush 25 in the first threaded bush 21, a ring 26 is screwed on the second bush 25. Both the second bush 25 and the ring 26 are respectively endowed with holes 27 and 28 to allow clamping with opportune spanners. In the second bush 25, the column 30 is introduced endowed with spacers 31 set between the head 32 of the column 30 and the head of the second bush 2. The second bush 25 of each spoke 16 of the supporting bearings 15 is screwed or unscrewed until all the heads 32 do not touch the workpiece 29. Jacks 34 mounted on the extremities of shaft 1 are used to lock the workpiece.

Before inserting the jacks 34, on one extremity or another of the shaft 1, the spacers 35 are inserted.

Shaft 1 at its two extremities has two solid pivots 36 that are inserted with force in shaft 1 itself to strengthen it.

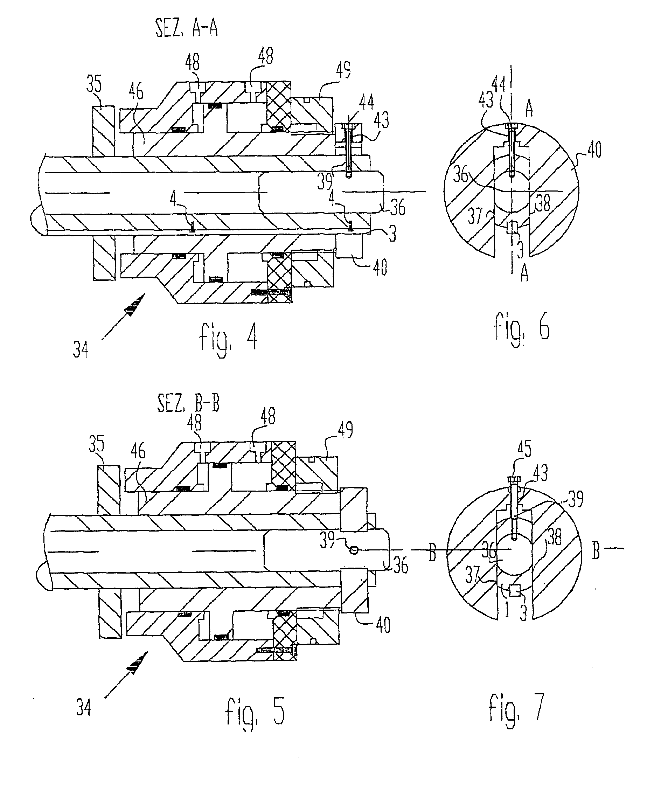

Shaft 1 at its extremities (see figures 6 and 7) has on both sides the cuttings 37 and 38 that arrive until the solid pivot 36.

The cuttings 37 and 38 are symmetrical in relation to the toothed rack 3.

On the opposite part of the toothed rack 3, on the shaft 1 a threaded hole 39 is realised (see figures 4, 5, 6 and 7).

The jacks 34 are opposed on one side by the supporting bearings 15, through the spacers 35, and on the other, at the extremity, by the slotted shoulders 40, for the jack thrust seal, that have two arms 41 and 42 with an opening that is equal to the distance between the cuttings 37 and 38 made on shaft 1 and on the solid pivots 36. The slotted shoulder 40 has a threaded hole 43 whose diameter is greater than the threaded hole 39 that is on shaft 1. The slotted shoulder 40 in order to be fastened on shaft 1 is tightened with a bolt 44 that is screwed into the threaded hole 39 that is on shaft 1.

To extract the slotted shoulder 40 the bolt 44 is unscrewed and a second bolt 45 is inserted that perfectly screws into threaded hole 43 of the clamping hole 40 and that therefore has a greater diameter than the threaded hole 39 of the shaft. For that reason, the second bolt 45, when it is screwed into the first threaded hole 43, arrives to the second threaded hole 39, but, it having a larger diameter than the aforesaid threaded hole 39, can not penetrate in it and it will push Shaft 1, compelling it to move upwards the slotted shoulder 40.

The jacks 34 are composed of an internal slide 46 and an external slide 47. The hydraulic fluid introduced under pressure through the 48 holes pushes the internal slide 46 against the slotted shoulder 40 and it forces the external slide 47 to push through the spacers 35 the supporting bearings 15 that in turn through the columns 30 fasten the workpiece 29. The packings 70 guarantee the hydraulic seal of the jacks. To improve head 32 gripping on the columns 32, one drives the back of the column with a mallet to make the head 32 penetrate and grip better, it is fitted with claw clamps and hardened to increase and improve the grasp on the workpiece 29.

For particular applications the claw clamped and hardened heads 32 may have the form that follows the shape of the workpiece 29. They are substitutable and, in some case heads 32 can be used to weld on the workpiece that 29, these heads are disposable, single use.

Essentially workpiece 29 is fastened between the supporting bearings driven by the jacks 34 and, therefore, shaft 1 is set into traction between the aforementioned bearings. For safety the external slides 47 that fasten through hydraulic pressure workpiece 29 are mechanically locked and definitively through the ring nuts 49 that are screwed on both sides of the internal slides 46. Once workpiece 29 is mechanically fastened, the hydraulic pressure that is exerted on the jacks 34 can be eliminated.

The hydraulic engine 50 supported by a stirrup 51 is mounted on the bush 2. The hydraulic engine 50 is stably connected with a gear wheel 52 that meshes with a gear wheel 53 fastened with screws 10 to the machine base 7. The hydraulic engine 50 allows the rotation movement.

On bush 2 is mounted, on a bearing such as engine 50, a second hydraulic engine 54 that with a worm gear 55 drives a gear wheel 56 that meshes with the toothed rack 3. The hydraulic engine 54 allows the translation movement.

The engines 50 and 54 are closed by casing 57, in sheet metal or plastic to avoid that the excess chip damages the engines.

Through a hydraulic power unit 60 it is possible to send pressurised fluid to the hydraulic engines 50 and 54 and to the jacks 34.

The power unit 60 is started through a hydraulic deflector 59. The pressurised fluid through tubes 61 and 62 is sent to engines 50 and 54 and to jacks 34.

Through lever 63 the rotation of engine 50 is activated and it transmits the rotation movement to machine base 7 in one direction pushing lever 63 right and in the opposite direction pushing it left.

The rotation speed is regulated through a fluxmeter controlled by knob 64.

Through lever 65 engine 54 is started, that through the worm gear 55 and 56 determines the translation movement in one direction pushing the lever 65 right and in the opposite direction pushing it left, the translation speed is instead regulated through a fluxmeter controlled by knob 66.

To avoid that the tubes 62 that supply the rotation engine 50 and the translation engine 54 get entangled, they are wound and unwound in a hose reel 6/ that winds the tubes 62 when the machine base draws nearer and unwinds the tubes 62 when they move away.

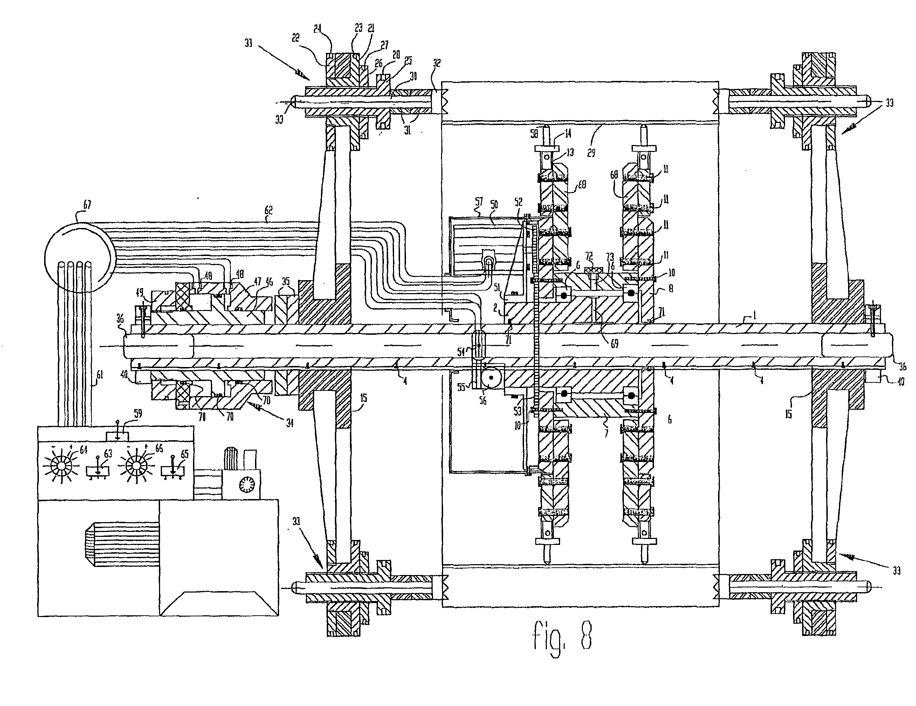

Referring to figure 8 on shaft 1 only one jack 34 is mounted that pushes the workpiece 29 through the columns 30 and the supporting bearings 15 against the slotted shoulder 40 positioned opposite the shaft and on its extremity. Shaft 1 will be therefore set in traction between the slotted shoulder 40 and the jack 34. For safety, even now the external slide 47 is mechanically locked through ring nut 49 that is screwed on the internal slide 46. Even in this case, once workpiece 29 is mechanically fastened, the hydraulic pressure that is exerted on jack 34 can be eliminated.

The space between the bush 2 and the rotating ring 7 forms the lubricant tank of the machine base. The bush 2 has a clearance hole 69 for lubrication of the bush 2 itself, of the shaft 1, of the rack 3, of the rotating ring 7. The lubricant is prevented from spilling by the seals 71. The lubricant is poured through the plug 73 arranged on the rotating ring 7, it goes through the clearance hole 74 reaches the space between the bush 2 and the rotating ring 7 that forms the tank of the lubricant itself.

Plates 68 are mounted on flanges 8 and 9 to allow processing of larger diameter pieces. The plates have a greater diameter than the two flanges 8 and 9 and on these plates 68 the tool design elements 13 are screwed.

The invention, it must be understood, is not limited to the representation given by the figures but may receive improvements and changes from the man of the art without going beyond the invention area as defined by the independent claim.

The present invention allows numerous advantages and overcomes difficulties that could not have been won with the systems today in commerce.

## Claims

1. Composable machine tool for chip removal, on major workpieces, within wide diameter and/or great length clearance holes, made up of a shaft (1) upon which is mounted a machine base, controlled by a first engine (50) for rotation movement, and by a second engine for translation movement **characterised by** the fact that the machine base is made up of a bush (2), that has a groove that receives, like a key, a rack (3) fastened on the shaft by allen screws (4), and a rotating ring (7), mounted on the bush (2) with airtight bearings (6), that the bush (2) can be translated on the shaft (1), that the shaft (1) is tubular sectioned, that on the rotating ring (7) are mounted, on both sides, two flanges (8 and 9) integral with the rotating ring itself (7) that carry tool design elements (12) or toolheads (72) and have a greater diameter than the rotating ring (7) itself, that on the flanges (8 and 9) are mounted, through screws (11), the tool design elements (12) or the toolheads (72), that on the shaft are mounted on both sides of the workpiece (29) two supporting bearings (15), that have some spokes (16) each of which have radial slots (17), in which groups (33) are inserted, regulated and locked to fasten the piece, that on the shaft, at least on one side a hydraulic jack is mounted (34), and that on the extremities of the shaft (1) two slotted shoulders (40) are mounted to allow a jack (34) to exert the necessary pressure to lock the workpiece.

2. Composable machine tool for chip removal, on major workpieces, within wide diameter and/or great length clearance holes according to claim 1 **characterised by** the fact that groups that insert themselves in the slots (17) to fasten the piece are each made up of first threaded bushes (21) that are locked with ring nuts (22) that are screwed on the external surface of the first threaded bushes (21), that both the first threaded bushes (21) and the ring nuts (22) have on the external rim holes respectively (23 and 24) to allow with opportune spanners adequate fastening of the first threaded bush (21) and the ring nut (22) on the bearing (15), that the axis of the clearance hole of the first threaded bush (21) is positioned in correspondence of the average diameter of the workpiece, that within the first threaded bush (21) is screwed a second bush (25) threaded on the external surface that is screwed within the first threaded bush (21), that before screwing the second bush (25) into the first threaded bush (21), on the second bush (25) a ring nut has been screwed (26), that both the second bush (25) and the ring nut (26) are respectively endowed with holes (27 and 28) to allow clamping by opportune spanners, that in the second bush (25) the column (30) is introduced endowed with spacers (31) set between the head (32) of the column (30) and the head of the second bush (25) and that the second bush (25) of each spoke (16) of the supporting bearings (15) is capable of being screwed or unscrewed until all the heads (32) do not touch the workpiece (29).

3. Composable machine tool for chip removal, on major workpieces, within wide diameter and/or great length clearance holes according to claim 1 **characterised by** the fact that engines (50 and 54) are hydraulic engines driven by a hydraulic power unit connected to them through tubes (61 and 62).

4. Composable machine tool for chip removal, on major workpiece, within wide diameter and great length clearance holes according to claim 1 **characterised by** the fact that the toothed rack (3), which is mounted through allen screws (4) on the shaft (1), protrudes from the shaft diameter (1) and is grafted on as a key in the bush (2) and in the supporting bearing hub (15).

5. Composable machine tool for chip removal, on major workpieces, within wide diameter and/or great length clearance holes according to claim 1 **characterised by** the fact that the engines (50 and 54) are contained in a casing.

6. Composable machine tool for chip removal, on major workpieces, within wide diameter and/or great length clearance holes according to claim 1 **characterised by** the fact that the engine (54) drives a worm gear (55) that moves a gear wheel (56) that meshes with the toothed rack (3).

7. Composable machine tool for chip removal, on major workpieces, within wide diameter and/or great length clearance holes according to claim 1 **characterised by** the fact that the tubes (62) are wound and unwound in a hose reel (67) as the machine base draws nearer and as it moves away.

8. Composable machine tool for chip removal, on major workpieces, within wide diameter and/or great length clearance holes according to claim 1 **characterised by** the fact that slotted shoulder (40) is fastened with a bolt (44) that is screwed in a threaded hole (39) present on the shaft (1) and on a pivot (36) inserted in an extremity of the shaft (1).

9. Composable machine tool for chip removal, on major workpieces, within wide diameter and/or great length clearance holes according to claim 1 **characterised by** the fact that the slotted shoulder (40) is suitable for being extracted by a second bolt (45) that is screwed in a threaded hole (43) present on the slotted shoulder (40) itself, the second bolt (45) having a larger diameter than the threaded hole (39) on the shaft so that it pushes externally the slotted shoulder itself (40).

## Patentansprüche

1. Einbauwerkzeugmaschine, um den Span von Stücken von großer Dimension, in Inneren Durchgangslöcher von großem Durchmesser und/oder von großer Länge zu entfernen, die aus einer Welle (1) besteht, auf der eine Antriebseinheit montiert ist, die durch ein ersten Motor (50) für die Umdrehungsbewegung und durch einen zweiten Motor für Übertragungsbewegung gesteuert ist, aufgrund der Tatsache gekennzeichnet,
- dass die Antriebseinheit aus einer Buchse (2), die eine Nut,die erhaltet, wie ein Keil, eine Zahnstange (3), welche auf der Welle mit Inbußchrauben (4) eingespannt ist darstellt und aus einem Drehring (7), der auf der Buchse (2) mit den luftdichten Langern (6) eingespannt ist, besteht;
- dass die Buchse (2) kann auf die Welle (1) übertragen sein;
- dass die Welle (1) mit Rohrquerschnitt ist;
- dass auf den beiden Seite des Drehrings (7) zwei Flansche (8 und 9) eingespannt sind, die eins mit dem selben Drehring (7) sind, die die e Vorrichtungwerkzeugselemente (12) oder die Supportoberteile (72) tragen und einen Durchmesser größer als der selbe Drehring haben;
- dass die Vorrichtungwerkzeugselemente (12) oder die Supportoberteile (72) auf den Flanschen (8 und 9) durch Schraube (11) eingespannt sind;
- dass zwei Stütztraeger (15), die mansche Speichen (16) haben, die jeweils Radialschlitze haben, in dem die Gruppe (33), um das Stück festzuziehen, eingelegt, eingestellt und gesperrt sind, auf der Welle von beiden Seiten des Werkstück (29) eingespannt sind;
- dass auf der Welle, mindestens von einer Seite,ein hydraulischer Hebebock (34) eingespannt wird;
- und dass zwei Steckanpaß (40) auf den zwei Extremen der Welle (1) eingespannt sind, so dass ein Hebebock (34) notwendigen Druck ausüben kann, um das Werkstück festzuklemmen.

2. Einbauwerkzeugmaschine, um den Span von Stücken von großer Dimension, in Inneren Durchgangslöcher von großem Durchmesser und/oder von großer Länge zu entfernen, die nach dem Patentanspruch 1 aufgrund der Tatsache gekennzeichnet,
- dass die Gruppe, die sich in die Schlitze (17) einfügen, um das Stück festzuziehen, jeden aus erste Gewindebuchse (21), die mit die Nutmutter (22), die auf der externen Oberfläche der erste Gewindebuchse (21) bestehet sind;
- dass sowohl die erste Gewindebuchse (21) als auch die Nutmutter (22) jeweils Löcher (23 bzw.24) auf den externen Kronen haben, um die erste Gewindebuchse (21) und die Nutmutter (22) auf dem Träger mit angemessenen Steckschlüsseln angemessenlich festzuziehen;
- dass die Achse der ersten Gewindebuchse (21) in Übereinstimmung mit der durchschnittlichen Durchmesser des Werkstück positioniert ist;
- dass in Inneren der ersten Gewindebuchse (21) eine zweite Buchse (25), die auf der externen Oberfläche ein Gewinde geschnitten hat, geschraubt ist;
- dass vor dem Anschraube der zweite Buchse (25) in Inneren der ersten Gewindebuchse (21), auf der zweite Buchse (25) eine Krone (26) geschraubt ist;
- dass sowohl die zweite Buchse (25) als auch die Krone (26) jeweils Löcher (27 und 28) haben, um die Halterung mit angemessenen Steckschlüsseln zu erlauben;
- dass man in Innren der zweiten Buchse (25) die Säule (30) steckt, die mit Distanzstücken ausgestatten ist, die sich zwischen der Spitze (32) der Säule (30) und der Spitze der zweiten Buchse (25) befinden;
- und dass die zweite Buchse (25) von jeder Speiche (16) der Stütztraeger (16) solange geschraubt oder abgeschraubt wird, bis alle Spitzen (32) das Werkstück (29) berühren.

3. Einbauwerkzeugmaschine, um den Span von Stücken von großer Dimension, in Inneren Durchgangslöcher von großem Durchmesser und/oder von großer Länge zu entfernen, die nach dem Patentanspruch 1 aufgrund der Tatsache gekennzeichnet, dass die Motoren (50 und 54) hydraulische Motoren sind, die durch ein hydraulisches Steuergerät angetrieben werden, das durch Schläuche (61 und 62) verbunden ist.

4. Einbauwerkzeugmaschine, um den Span von Stücken von großer Dimension, in Inneren Durchgangslöcher von großem Durchmesser und/oder von großer Länge zu entfernen, die nach dem Patentanspruch 1 aufgrund der Tatsache gekennzeichnet, dass die Zahnstange (3), die auf der Welle (1) mit Inbußchrauben (4) eingespannt ist, von dem Durchmesser der Welle (1) hervorspringt und, wie ein Keil, in die Buchse (2) und in die Nabe des Stützträgers (15) einsteckt.

5. Einbauwerkzeugmaschine, um den Span von Stücken von großer Dimension, in Inneren Durchgangslöcher von großem Durchmesser und/oder von großer Länge zu entfernen, die nach dem Patentanspruch 1 aufgrund der Tatsache gekennzeichnet, dass die Motoren (50 und 54) in einem Kurbelgehäuse enthalten sind.

6. Einbauwerkzeugmaschine, um den Span von Stücken von großer Dimension, in Inneren Durchgangslöcher von großem Durchmesser und/oder von großer Länge zu entfernen, die nach dem Patentanspruch 1 aufgrund der Tatsache gekennzeichnet, dass das Motor (54) einen unendlichen Schraubenmechanismus (55) veranlässt, der ein Zahnrad (56) bewegt, welches mit der Zahnstange(3) ineinander greift.

7. Einbauwerkzeugmaschine, um den Span von Stücken von großer Dimension, in Inneren Durchgangslöcher von großem Durchmesser und/oder von großer Länge zu entfernen, die nach dem Patentanspruch 1 aufgrund der Tatsache gekennzeichnet, dass die Schläuche (62), wenn die Antriebseinheit sich entfernt und sich annähert, auf Schlauchhaspel (67) abwickelt und einwickelt werden.

8. Einbauwerkzeugmaschine, um den Span von Stücken von großer Dimension, in Inneren Durchgangslöcher von großem Durchmesser und/oder von großer Länge zu entfernen, die nach dem Patentanspruch 1 aufgrund der Tatsache gekennzeichnet, dass das Stecksanpaß (40) mit einem Bolzen (44) in einem Gewindeloch (39), der auf der Welle (1) ist, und in einem Zapfen (36), der sich auf einem Extrem der Welle (1) befindet, festgeschraubt ist.

9. Einbauwerkzeugmaschine, um den Span von Stücken von großer Dimension, in Inneren Durchgangslöcher von großem Durchmesser und/oder von großer Länge zu entfernen, die nach dem Patentanspruch 1 aufgrund der Tatsache gekennzeichnet, dass das Stecksanpaß (40), das durch einen zweiten Bolzen (45), der (45) in einem Gewindeloch (43) geschraubt ist , der auf dem selben Stecksanpaß (40) ist, herausgezogen wird, dass der zweite Bolzen (45), der einen größeren Durchmesser als der des Gewindelochs (39) hat, drückt das selbe Stecksanpaß (40) nach außen.

## Revendications

1. Machine outil par éléments pour usinage avec copeaux de tournage sur des pièces de grande taille, en trous débouchants très longs et/or de gros diamètres; elle est composée par un arbre (1) et par un corps mécanique monté sur l'arbre et entraîné par un premier moteur électronique (50) pour la rotation et par un deuxième moteur pour l'avancement **caractérisée par le fait que** le corps mécanique est composé d'une douille (2) avec une rainure à faire coïncider avec la crémaillère (3) située sur l'arbre par des vis (4) et par une bague tournante (7) située sur la douille (2) avec des coussinets étanches (6), que la douille (2) peut être mue par translation sur l'arbre (1), que l'arbre (1) est à section tubulaire, sur la bague tournante (7) il y a, d'un côté et de l'autre, deux flasques (8 et 9) solidaires avec la même bague tournante (7) qui portent les outillages (12) ou les têtes porte-outil (72), que les deux flasques ont un diamètre plus grand que la bague tournante (7) et les outillages et les têtes porte-outil sont fixées par des vis (11); que sur l'arbre sont montés, d'un côté et de l'autre, deux paliers supports (15) qui ont des rayons (16) avec de fentes radiales (17) dans les quelles on introduit, registre et bloque les groups (33) pour serrer la pièce, que au moins d'un côté de l'arbre il y a un vérin hydraulique (34), que sur les deux extrémités de l'arbre (1) il y a deux épaules (40) emboîtées pour permettre au vérin (34) d'exercer la pression nécessaire pour bloquer la pièce à usiner.

2. Machine outil par éléments pour usinage avec copeaux de tournage sur pièces de grande taille, en trous débouchants très longs et/or de gros diamètres, selon la revendication 1, **caractérisée par le fait que** les groups qui s'introduisent dans les fentes (17) pour bloquer la pièce, sont constitués par des douilles filetées (21) qui sont bloquées par des éléments filetés (22) qui se vissent sur la surface extérieure des douilles filetées (21), que soit les premières douilles filetées (21) que les éléments filetés (22) ont, sur la couronne extérieure, des trous, respectivement (23 et 24), pour effectuer, par des clés, le blocage de la première douille filetée (21) et de l'élément fileté (22) sur le support (15), que l'axe du trous de la première douille filetée (21) correspond au diamètre moyen de la pièce à usiner, que au dedans de la douille filetée (21) une deuxième douille filetée (25) est vissée sur la surface extérieure qui se visse au dedans de la première douille filetée (21), que avant de visser la deuxième douille (25) dans la première douille filetée (21), on doit visser un élément fileté (26) sur la deuxième douille, que soit la deuxième douille (25) que l'élément fileté (26) ont des trous (27 et 28 ) pour effectuer le blocage par des clés, que dans la deuxième douille (25) on introduit la colonne (30) équipée d'entretoises (31) située entre la tête (32) de la colonne (30) et la tête de la deuxième douille (25), que la deuxième douille (25) de chaque rayon (16) des supports paliers (15) est vissée ou dévissée jusqu' à faire toucher les têtes (32) à la pièce à usiner (29).

3. Machine outil par éléments pour usinage avec copeaux de tournage sur pièces de grande taille, en trous débouchants très longs et/or de gros diamètres, selon la revendication 1, **caractérisée par le fait que** les moteurs (50 et 54) sont moteurs hydrauliques entraînés par un central hydraulique connecté aux moteurs par des tubes (61 et 62).

4. Machine outil par éléments pour usinage avec copeaux de tournage sur pièces de grande taille, en trous débouchants très longs et/or de gros diamètres, selon la revendication 1, **caractérisée par le fait que** la crémaillère (3) dépasse le diamètre de l'arbre (1) et s'engage, comme un clés, dans la douille (2) et dans le moyeu du palier support (15).

5. Machine outil par éléments pour usinage avec copeaux de tournage sur pièces de grande taille, en trous débouchants très longs et/or de gros diamètres, selon la revendication n° 1, **caractérisée par le fait que** les moteurs (50 et 54) sont situés dans un carter.

6. Machine outil par éléments pour usinage avec copeaux de tournage sur pièces de grande taille, en trous débouchants très longs et/or de gros diamètres, selon la revendication 1, **caractérisée par le fait que** le moteur (54) entraîne un mécanisme de vis sans fin (55) qui entraîne une roue dentée (56) qui entraîne la crémaillère dentée (3).

7. Machine outil par éléments pour usinage avec copeaux de tournage sur pièces de grande taille, en trous débouchants très longs et/or de gros diamètres, selon la revendication 1, **caractérisée par le fait que** les tubes (62) se déroulent et s'enroulent sur un enrouleur (67) lorsque la machine s'éloigne ou s'approche.

8. Machine outil par éléments pour usinage avec copeaux de tournage sur pièces de grande taille, en trous débouchants très longs et/or de gros diamètres, selon la revendication 1, **caractérisée par le fait que** l'épaule à emboîtement (40) est fixée par un boulon (44) qui est vissé dans le trous fileté (39) sur l'arbre (1) et dans le pivot (36) inséré à l'extrémité de l'arbre.

9. Machine outil par éléments pour usinage avec copeaux de tournage sur pièces de grande taille, en trous débouchants très longs et/or de gros diamètres, selon la revendication 1, **caractérisée par le fait que** l'épaule à emboîtement (40) est capable d'être extrait par le deuxième boulon (45) qui se visse dans un trous fileté (43) qui se trouve dans l'épaule à emboîtement même (40), le deuxième boulon (45) a le diamètre plus grand du trou fileté (39) sur l'arbre et donc pousse en avant l'épaule à emboîtement même (40).
